# FASCICULE DE BREVET EUROPEEN

(11) **EP 1 043 680 B1**
(45) Date de publication et mention de la délivrance du brevet: **03.09.2008**
(21) Numéro de dépôt: 00410034.3
(22) Date de dépôt: 06.04.2000
(51) Int. Cl.: G06K 7/00, G06K 19/07

(54) **Transpondeur électromagnétique à fonctionnement en couplage très proche**
Enggekoppelter elektromagnetischer Transponder
Very close-coupled electromagnetic transponder

(30) Priorité: 07.04.1999 FR 9904547
(43) Date de publication de la demande: 11.10.2000
(73) Titulaire: STMicroelectronics S.A., 92120 Montrouge (FR)
(72) Inventeur: Wuidart, Luc, 83910 Pourrieres (FR); Bardouillet, Michel, 13790 Rousset (FR); Enguent, Jean-Pierre, 13119 Saint Savournin (FR)
(74) Mandataire: de Beaumont, Michel

(56) Documents cités:
- EP-A- 0 369 622
- EP-A- 0 706 151
- US-A- 4 656 472

## Description

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe), dite borne de lecture et/ou d'écriture. L'invention concerne, plus particulièrement, des transpondeurs dépourvus d'alimentation autonome. Ces transpondeurs extraient l'alimentation nécessaire aux circuits électroniques qu'ils comportent du champ haute fréquence rayonné par une antenne de la borne de lecture et d'écriture. L'invention s'applique à de tels transpondeurs, qu'il s'agisse de transpondeurs à lecture seule, c'est-à-dire propres à fonctionner avec une borne se contentant de lire les données du transpondeur, ou à des transpondeurs à lecture-écriture qui contiennent des données qui peuvent être modifiées par la borne.

Les transpondeurs électromagnétiques sont basés sur l'emploi de circuits oscillants comprenant un enroulement formant antenne, côté transpondeur et côté borne de lecture-écriture. Ces circuits sont destinés à être couplés par champ magnétique proche lorsque le transpondeur entre dans le champ de la borne de lecture-écriture. La portée d'un système à transpondeur, c'est-à-dire la distance maximale de la borne à laquelle un transpondeur est activé (réveillé) dépend, notamment, de la taille de l'antenne du transpondeur, de la fréquence d'excitation de la bobine du circuit oscillant engendrant le champ magnétique, de l'intensité de cette excitation, et de la consommation en puissance du transpondeur.

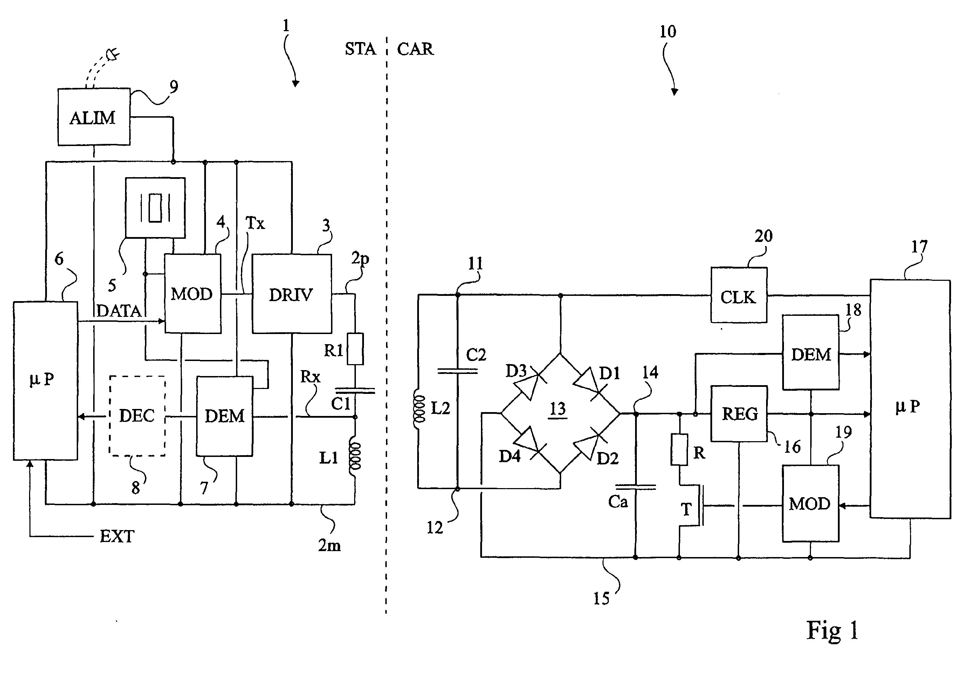

La figure 1 représente, de façon très schématique et fonctionnelle, un exemple classique de système d'échange de données entre une borne 1 de lecture-écriture (STA) et un transpondeur 10 (CAR).

Généralement, la borne 1 est essentiellement constituée d'un circuit oscillant formé d'une inductance L1, en série avec un condensateur C1 et une résistance R1, entre une borne 2p de sortie d'un amplificateur ou coupleur d'antenne 3 (DRIV) et une borne 2m à un potentiel de référence (généralement, la masse). L'amplificateur 3 reçoit un signal Tx de transmission haute fréquence, issu d'un modulateur 4 (MOD). Le modulateur reçoit une fréquence de référence, par exemple d'un oscillateur à quartz 5 et, si besoin, un signal DATA de données à transmettre. En l'absence de transmission de données de la borne 1 vers le transpondeur 10, le signal Tx sert uniquement de source d'énergie pour activer le transpondeur si celui-ci passe dans le champ. Les données à transmettre proviennent généralement d'un système numérique, par exemple, un microprocesseur 6 (µP).

Le point de connexion du condensateur C1 et de l'inductance L1 constitue, dans l'exemple représenté à la figure 1, une borne de prélèvement d'un signal Rx de données, reçues d'un transpondeur 10 à destination d'un démodulateur 7 (DEM). Une sortie du démodulateur communique (le cas échéant par l'intermédiaire d'un décodeur (DEC) 8) les données reçues du transpondeur 10 au microprocesseur 6 de la borne de lecture-écriture 1. Le démodulateur 7 reçoit, généralement de l'oscillateur 5, un signal d'horloge ou de référence pour une démodulation de phase. Le cas échéant, la démodulation est effectuée à partir d'un signal prélevé entre le condensateur C1 et la résistance R1, et non aux bornes de l'inductance L1. Le microprocesseur 6 communique (bus EXT) avec différents circuits d'entrée/sortie (clavier, écran, moyen de transmission vers un serveur, etc.) et/ou de traitement. Les circuits de la borne de lecture-écriture tirent l'énergie nécessaire à leur fonctionnement d'un circuit d'alimentation 9 (ALIM) raccordé, par exemple, au réseau de distribution électrique.

Côté transpondeur 10, une inductance L2, en parallèle avec un condensateur C2, forme un circuit oscillant parallèle (appelé circuit résonant en réception), destiné à capter le champ magnétique engendré par le circuit oscillant série L1C1 de la borne 1. Le circuit résonant (L2, C2) du transpondeur 10 est accordé sur la fréquence de résonance du circuit oscillant (L1, C1) de la borne 1.

Les bornes 11, 12 du circuit résonant L2C2 qui correspondent aux bornes du condensateur C2, sont reliées à deux bornes d'entrée alternative d'un pont redresseur 13 constitué, par exemple, de quatre diodes D1, D2, D3, D4. Dans la représentation de la figure 1, l'anode de la diode D1 est connectée à la borne 11, de même que la cathode de la diode D3. L'anode de la diode D2 et la cathode de la diode D4 sont connectées à la borne 12. Les cathodes des diodes D1 et D2 constituent une borne positive 14 de sortie redressée. Les anodes des diodes D3 et D4 constituent une borne de référence 15 de la tension redressée. Un condensateur Ca est connecté aux bornes de sortie redressée 14, 15 du pont 13 de façon à stocker de l'énergie et à lisser la tension redressée délivrée par le pont. On notera que le pont de diodes peut être remplacé par un montage de redressement monoalternance.

Quand le transpondeur 10 se trouve dans le champ de la borne 1, une tension haute fréquence est engendrée aux bornes du circuit résonant L2C2. Cette tension, redressée par le pont 13 et lissée par le condensateur Ca, fournit une tension d'alimentation à des circuits électroniques du transpondeur par l'intermédiaire d'un régulateur de tension 16 (REG). Ces circuits comprennent généralement, essentiellement, un microprocesseur (µP) 17 (associé à une mémoire non représentée), un démodulateur 18 (DEM) des signaux éventuellement reçus de la borne 1, et un modulateur 19 (MOD) pour transmettre des informations à la borne 1. Le transpondeur est généralement synchronisé au moyen d'une horloge (CLK) extraite, par un bloc 20, du signal haute fréquence récupéré aux bornes du condensateur C2, avant redressement. Le plus souvent, tous les circuits électroniques du transpondeur 10 sont intégrés dans une même puce.

Pour transmettre des données du transpondeur 10 vers la borne 1, le modulateur 19 commande un étage de modulation (rétromodulation) du circuit résonant L2C2. Cet étage de modulation est généralement constitué d'un interrupteur électronique (par exemple, un transistor T) et d'une résistance R, en série entre les bornes 14 et 15. Le transistor T est commandé à une fréquence (par exemple, 847,5 kHz) dite sous-porteuse, nettement inférieure (généralement avec un rapport d'au moins 10) à la fréquence du signal d'excitation du circuit oscillant de la borne 1 (par exemple, 13,56 MHz). Lorsque l'interrupteur T est fermé, le circuit oscillant du transpondeur est soumis à un amortissement supplémentaire par rapport à la charge constituée des circuits 16, 17, 18, 19 et 20, de sorte que le transpondeur prélève une quantité d'énergie plus importante du champ magnétique haute fréquence. Côté borne 1, l'amplificateur 3 maintient constante l'amplitude du signal d'excitation à haute fréquence. Par conséquent, la variation d'énergie du transpondeur se traduit par une variation d'amplitude et de phase du courant dans l'antenne L1. Cette variation est détectée par le démodulateur 7 de la borne 1 qui est soit un démodulateur de phase, soit un démodulateur d'amplitude. Par exemple, dans le cas d'une démodulation de phase, le démodulateur détecte, dans les demi-périodes de la sous-porteuse où l'interrupteur T du transpondeur est fermé, un léger déphasage (quelques degrés, voire moins d'un degré) de la porteuse du signal Rx par rapport au signal de référence. La sortie du démodulateur 7 (généralement la sortie d'un filtre passe-bande centré sur la fréquence de la sous-porteuse) restitue alors un signal image du signal de commande de l'interrupteur T qui peut être décodé (par le décodeur 8 ou directement par le microprocesseur 6) pour restituer les données binaires.

On notera que la borne ne transmet pas de données pendant qu'elle en reçoit d'un transpondeur, la transmission de données s'effectuant alternativement dans un sens puis dans l'autre (semi-duplex).

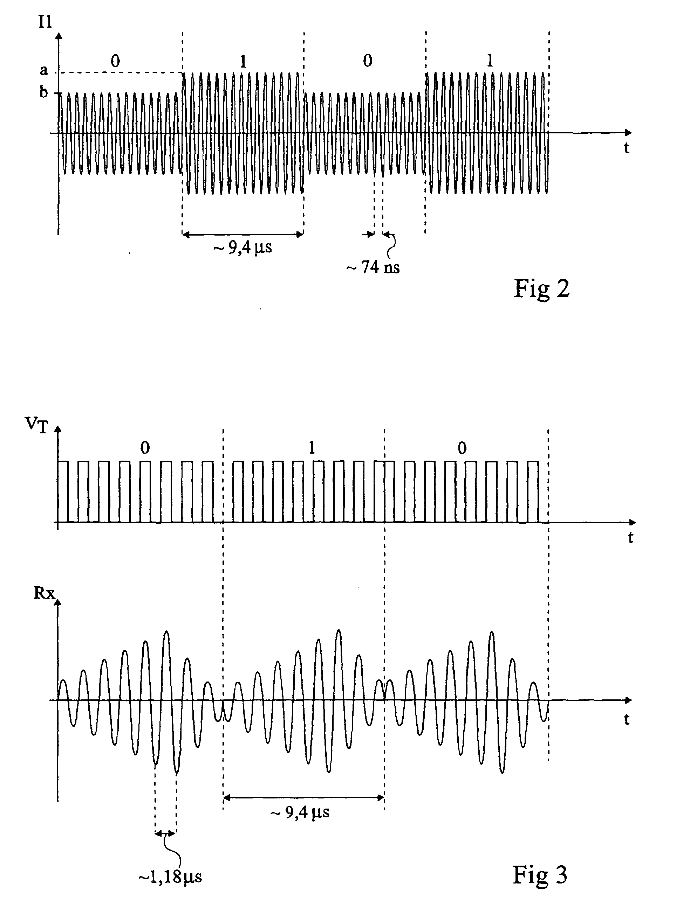

La figure 2 illustre un exemple classique de transmission de données de la borne 1 vers un transpondeur 10. Cette figure représente un exemple d'allure du signal d'excitation de l'antenne L1 pour une transmission d'un code 0101. La modulation courant utilisée est une modulation d'amplitude avec un débit de 106 kbit/s (un bit est transmis en environ 9,5 µs) nettement inférieur à la fréquence (par exemple, 13,56 MHz) de la porteuse provenant de l'oscillateur 5 (période d'environ 74 ns). La modulation d'amplitude s'effectue, soit en tout ou rien, soit avec un taux de modulation (défini comme étant la différence des amplitudes crêtes (a, b) entre les deux états (0 et 1), divisée par la somme de ces amplitudes) inférieur à l'unité en raison du besoin d'alimentation du transpondeur 10. Dans l'exemple de la figure 2, la porteuse à 13,56 MHz est modulée, avec un débit de 106 kbit/s, en amplitude avec un taux de modulation tm de, par exemple, 10%.

La figure 3 illustre un exemple classique de transmission de données du transpondeur 10 vers la borne 1. Cette figure illustre un exemple d'allure du signal V_{T} de commande du transistor T, fourni par le modulateur 19, et du signal correspondant Rx reçu par la borne 1. Côté transpondeur, la rétromodulation est généralement de type résistif avec une porteuse (dite sous-porteuse) de, par exemple, 847,5 kHz (période d'environ 1,18 µs). La rétromodulation est, par exemple, basée sur un codage de type BPSK (codage binaire par saut de phase) à un débit de l'ordre de 106 kbit/s nettement inférieur à la fréquence de la sous-porteuse. A la figure 3, le signal Rx a été représenté "lissé", c'est-à-dire sans faire apparaître les ondulations de la porteuse haute fréquence (par exemple à 13,56 MHz). Dans l'exemple de la figure 3, on a considéré que chacun des trois bits représentés était différent du bit précédent. Ainsi, il s'agit, par exemple, d'une transmission d'un code 010.

On notera que, quel que soit le type de modulation ou de rétromodulation utilisé (par exemple, d'amplitude, de phase, de fréquence) et quel que soit le type de codage des données (NRZ, NRZI, Manchester, ASK, BPSK, etc.), celle-ci s'effectue de façon numérique, par saut entre deux niveaux binaires.

Les circuits oscillants de la borne et du transpondeur sont généralement accordés sur la fréquence de la porteuse, c'est-à-dire que leur fréquence de résonance est réglée sur la fréquence de 13,56 MHz. Cet accord a pour objet de maximiser la diffusion d'énergie vers le transpondeur, généralement, une carte de format type carte de crédit intégrant les différents constituants du transpondeur.

Comme l'illustre la figure 3, le signal V_{T} est constitué d'un train d'impulsions à la fréquence de la sous-porteuse (par exemple 847,5 kHz), un saut de phase intervenant à chaque changement d'état d'un bit au bit suivant. Pour ce qui est du signal récupéré côté lecteur, on constate que celui-ci n'a pas une forme "numérique", ce qui peut rendre difficile son décodage. En effet, l'allure du signal Rx a, à chaque temps (9,4 µs) de transmission d'un bit, un début de croissance non linéaire (en charge de capacité) jusqu'à un maximum environ au deux tiers de la durée d'un bit, puis une décroissance également non linéaire. Le temps d'établissement, c'est-à-dire le temps mis par le signal Rx à atteindre un niveau décodable par le démodulateur, est lié au fait que les circuits oscillants sont accordés. Le besoin de transfert d'énergie pour la téléalimentation, associé à la portée souhaitée pour le système, impose un facteur de qualité élevé, donc que les circuits oscillants soient accordés. Or, un facteur de qualité élevée entraîne une faible bande passante. Il en découle un débit de données limité pour le système. Généralement, les facteurs de qualité sont de l'ordre de 10 pour le lecteur et pour le transpondeur.

Le transpondeur peut être constitué par divers objets (porte-clés, clés, etc.), mais est le plus souvent aujourd'hui une carte du format d'une carte de crédit qui intègre tous les circuits et l'antenne ou inductance L2. Pour un échange d'informations avec un lecteur ou borne, la carte est approchée de l'antenne L1 du lecteur. La distance entre le lecteur et la carte varie et, dans certaines applications, on utilise une transmission en couplage très proche ou serré, les antennes étant distantes l'une de l'autre de moins d'environ deux centimètres. Une telle transmission en couplage serré peut être utilisée, par exemple, pour valider un paiement au moyen d'un transpondeur, et garantir ainsi que seul le transpondeur le plus proche de la borne est reconnu par celle-ci.

Un problème qui se pose lorsque les circuits oscillants sont très proches l'un de l'autre est que, s'ils sont sensiblement accordés, l'énergie transmise de la borne vers le transpondeur est telle que celui-ci chauffe (l'antenne L2 est généralement constituée d'une ou plusieurs spires planes en périphérie de la carte). Cet effet thermique a pour conséquence une déformation de la carte en matière plastique.

Le document EP-A-0 706 151 et EP-A-0 369 622 décrivent des transpondeurs électromagnétiques comportant des circuits oscillants et des moyens pour transmettre des données en désaccordant leur circuit oscillant.

La présente invention vise à proposer une nouvelle solution qui pallie aux inconvénients des solutions classiques lorsqu'un transpondeur se trouve en relation de couplage très proche avec une borne de lecture-écriture.

La présente invention vise en particulier à minimiser l'effet thermique lié à la téléalimentation du transpondeur par la borne de lecture-écriture.

La présente invention vise également à ce que la solution proposée permette une augmentation du débit de transmission de données lorsque le transpondeur est très proche de la borne.

La présente invention vise en outre à proposer une solution qui ne nécessite aucune modification structurelle du lecteur ou borne.

Une caractéristique de la présente invention est de désaccorder le circuit oscillant du transpondeur lorsque celui-ci se trouve dans une relation de couplage très proche, ou serré, avec une borne de lecture ou de lecture-écriture.

Un désaccord en fréquence d'un transpondeur électromagnétique est connu du document WO-A-98/29760. Ce document prévoit que l'antenne d'un transpondeur soit "désaccordée en fréquence ou désadaptée en impédance, de sorte que le transpondeur et son circuit électronique absorbent moins de champ radio et d'énergie. Ainsi, un autre transpondeur situé à proximité du transpondeur désadapté ou désaccordé pourra recevoir suffisamment de champ radio et d'énergie pour fonctionner correctement. Le système de transmission pourra alors détecter ou consulter cet autre transpondeur comme s'il se trouvait seul dans le champ" de l'émetteur. Toujours selon ce document, les moyens de désadaptation sont mis en oeuvre "lorsque le transpondeur est dans un état non sélectionné afin de limiter l'absorption d'énergie et/ou de champ par le transpondeur dans l'état non sélectionné."

La solution préconisée par ce document revient à désaccorder les transpondeurs relativement lointains de la borne pour maximiser l'énergie reçue par le transpondeur le plus proche devant communiquer avec la borne. Une telle solution ne résout pas les problèmes susmentionnés de couplage serré. En effet, le transpondeur qui reste accordé est le transpondeur sélectionné.

A l'inverse de ce document, la présente invention prévoit un fonctionnement désaccordé en couplage serré. Ainsi, une caractéristique de la présente invention est de prévoir, pour une transmission d'informations en couplage serré, un fonctionnement désaccordé du circuit d'un transpondeur électromagnétique télé-alimenté par une borne.

La présente invention tient compte du fait que l'énergie de téléalimentation récupérée côté transpondeur, n'est pas une fonction monotone de la distance qui sépare le transpondeur de la borne.

En effet, quand les circuits oscillants sont accordés sur la fréquence de la porteuse de téléalimentation, si le transpondeur se rapproche d'une borne, l'amplitude de la téléalimentation commence par croître depuis la limite de portée du système (de l'ordre d'une dizaine de centimètres). Cette amplitude passe par un maximum (position de couplage critique) puis se met à diminuer de nouveau quand le transpondeur devient très proche (environ, moins de 2 centimètres). C'est notamment pour cette raison que, dans les systèmes classiques, on ne prévoit pas de rendre la puissance de la borne dépendante de la distance à laquelle se trouve le transpondeur.

La position de couplage critique correspond à la distance à laquelle le couplage entre le transpondeur et la borne est optimisé par une amplitude de téléalimentation maximale reçue par le transpondeur lorsque les circuits oscillants de la borne et du transpondeur sont tous deux accordés sur la fréquence de la porteuse de téléalimentation. En d'autres termes, la position de couplage critique correspond à la distance où l'énergie de téléalimentation est maximale pour un facteur de couplage minimal, le facteur de couplage étant le rapport de la mutuelle inductance sur la racine carré du produit des inductances des circuits oscillants.

Quand le circuit oscillant du transpondeur est désaccordé de la fréquence de la porteuse de téléalimentation, l'énergie reçue par le transpondeur augmente au fur et à mesure que la distance de la borne diminue, mais avec une portée réduite. Dans ce cas, il existe également une distance à laquelle l'énergie reçue est maximale pour une condition de désaccord donnée. On parle de couplage optimal, la position de couplage critique étant la position de couplage optimal quand les deux circuits oscillants sont accordés sur la fréquence de la porteuse. On notera que le coefficient de couplage optimal entre les deux circuits oscillants dépend non seulement des inductances L1 et L2, des condensateurs C1 et C2 et de la fréquence (qui est ici fixe et correspond à la fréquence de la porteuse), mais également de la résistance série R1 de la borne, et de la charge du circuit oscillant du transpondeur, c'est-à-dire de la résistance équivalente des circuits (microprocesseur, etc.) et du moyen de rétromodulation (par exemple, la résistance R, figure 1), ramenée en parallèle sur le condensateur C2 et l'inductance L2. On désignera par la suite par R2, cette résistance équivalente.

Ainsi, le système de transmission sans contact et sans fil fonctionne, même si un des circuits oscillants est désaccordé, pourvu que les antennes soient très proches l'une de l'autre.

Plus précisément, la présente invention prévoit un transpondeur électromagnétique selon la revendication 1.

Selon un mode de réalisation de la présente invention, ladite fréquence déterminée correspond à la fréquence d'une porteuse de téléalimentation du transpondeur, provenant de ladite borne.

Selon un mode de réalisation de la présente invention, les moyens de désaccord du circuit oscillant sont constitués d'une capacité commutée, en parallèle avec un élément inductif du circuit, ledit moyen de redressement étant constitué d'un élément à conduction unidirectionnelle.

Selon un mode de réalisation de la présente invention, les moyens de désaccord du circuit oscillant sont constitués de deux condensateurs, respectivement associés à chaque borne d'extrémité d'un élément inductif du deuxième circuit oscillant, chaque condensateur étant associé en série à un moyen de commutation dont une borne de référence est connectée à un potentiel de référence d'alimentation du circuit électronique, en aval du moyen de redressement.

Selon un mode de réalisation de la présente invention, lesdits moyens pour désaccorder le circuit oscillant sont commandables entre deux positions de façon à permettre une sélection entre un fonctionnement du transpondeur accordé sur ladite fréquence déterminée, ou désaccordé de cette fréquence déterminée.

Selon un mode de réalisation de la présente invention, lesdits moyens pour désaccorder le transpondeur servent également à détecter la distance qui le sépare d'une borne de lecture-écriture.

Selon un mode de réalisation de la présente invention, le transpondeur comporte en outre deux moyens de modulation résistive, en parallèle sur un condensateur de lissage de la tension redressée délivrée par ledit moyen de redressement, chaque moyen de modulation étant dédié à un des modes de fonctionnement accordé ou désaccordé du transpondeur.

L'invention concerne également un système de transmission de données sans fil et sans contact entre une borne de génération d'un champ électromagnétique et au moins un transpondeur dépourvu de moyens d'alimentation autonome.

Selon un mode de réalisation de la présente invention, le débit de transmission des données du transpondeur vers la borne est différent selon que le circuit oscillant du transpondeur est ou non accordé sur la fréquence déterminée, le transpondeur étant conforme au transpondeur mentionné ci-dessus.

Selon un mode de réalisation de la présente invention, le débit de transmission des données de la borne vers le transpondeur est différent selon que le circuit oscillant du transpondeur est ou non accordé sur la fréquence déterminée.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
Les figures 1 à 3 décrites précédemment sont destinées à exposer l'état de la technique et le problème posé ;
la figure 4 illustre, sous forme de chronogramme, un mode de mise en oeuvre du procédé de transmission de la présente invention en couplage serré ;
la figure 5 représente un premier mode de réalisation d'un transpondeur électromagnétique selon la présente invention, pourvu de moyens pour désaccorder le circuit oscillant du transpondeur ;
la figure 6 représente un deuxième mode de réalisation d'un transpondeur électromagnétique selon la présente invention, pourvu de moyens pour désaccorder le circuit oscillant du transpondeur ; et
la figure 7 représente un troisième mode de réalisation d'un transpondeur électromagnétique selon la présente invention, pourvu de moyens pour désaccorder le circuit oscillant du transpondeur.

Les mêmes éléments ont été désignés par les mêmes références aux différentes figures, et les figures ont été tracées sans respect d'échelle. Pour des raisons de clarté, seuls les éléments qui sont nécessaires à la compréhension de l'invention ont été représentés aux figures et seront décrits par la suite. En particulier, les circuits électroniques numériques n'ont pas été détaillés, que ce soit côté transpondeur ou côté lecteur.

Une caractéristique de la présente invention est de prévoir de désaccorder le circuit oscillant d'un transpondeur lorsque celui-ci se trouve dans une situation de couplage serré avec une borne, c'est-à-dire que leurs antennes respectives sont situées, par exemple, à moins de 2 centimètres l'une de l'autre.

La conséquence d'un tel désaccord est que le fonctionnement se rapproche de celui d'un transformateur, c'est-à-dire que le facteur de qualité intervient moins. Or, dans le fonctionnement accordé classique, on recherche un facteur de qualité le plus élevé possible pour optimiser le transfert d'énergie lié à la téléalimentation du transpondeur.

Le fait de désaccorder le transpondeur lorsque le couplage est très proche présente plusieurs avantages.

Dans un fonctionnement désaccordé, on peut diminuer la puissance de la borne, c'est-à-dire le courant dans l'antenne (L1, figure 1), tout en transmettant une énergie suffisante à la téléalimentation du transpondeur. En effet, comme le transpondeur est très proche de la borne, le problème de portée de la téléalimentation a disparu. La puissance nécessaire dépend alors essentiellement du rapport de transformation (rapport entre les nombres de spires) des inductances des circuits oscillants. La diminution du courant nécessaire dans l'antenne supprime l'effet thermique côté transpondeur.

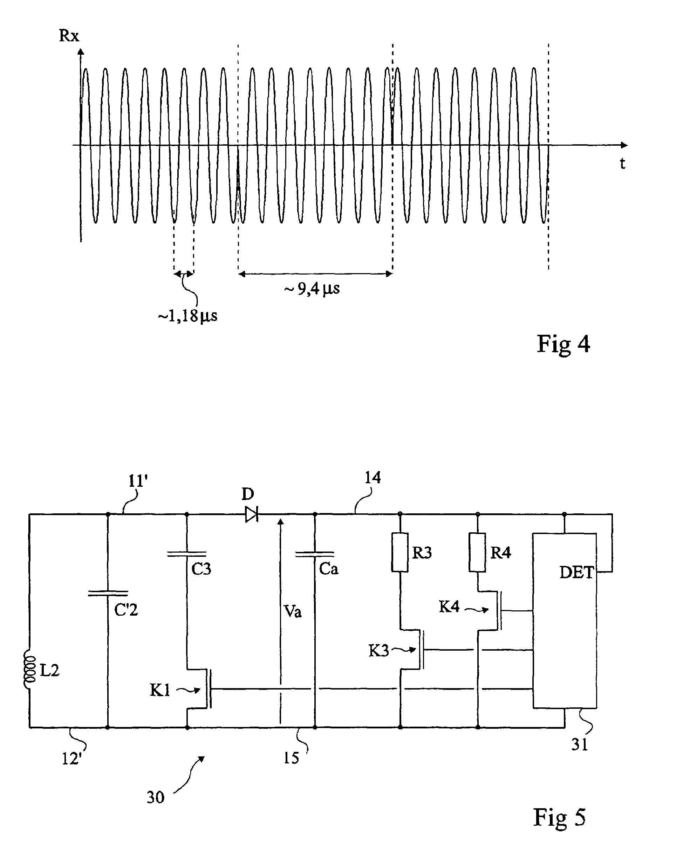

La figure 4 illustre l'allure du signal reçu Rx, côté lecteur, suite à une rétromodulation résistive, côté transpondeur, alors qu'au moins un des circuits oscillants est désaccordé de la fréquence de la porteuse de téléalimentation (par exemple, 13,56 MHz). Cette figure est à rapprocher de la figure 3. Comme on peut le constater, les temps d'établissement ont quasiment disparu. Le signal Rx a une allure sensiblement similaire à celle du signal de commande de la grille de transistor T, côté transpondeur. Par conséquent, il est désormais possible d'accroître les débits de transmission dans la mesure où il n'est plus nécessaire d'attendre, pour chaque bit transmis, que le signal Rx atteigne le seuil de détection du démodulateur de phase de la borne.

On notera que le désaccord du circuit oscillant du transpondeur n'est souhaitable qu'en couplage très proche, ou serré. Par conséquent, l'invention permet de dissocier aisément deux modes de fonctionnement du système selon que le transpondeur est ou non très proche du lecteur. On notera également que le coefficient de couplage diminue par le désaccord du circuit oscillant. Cela n'est pas gênant dans la mesure où les deux circuits oscillants sont alors très proches l'un de l'autre en fonctionnement de type transformateur.

Un avantage de prévoir un désaccord du circuit oscillant du transpondeur est que cela ne nécessite aucune modification matérielle des bornes de lecture-écriture existantes. Cet avantage est particulièrement sensible pour des systèmes prévoyant un parc de bornes dont au moins une partie est déjà installée. De plus, si les modes de fonctionnement en couplage serré et en couplage lâche n'ont pas besoin d'être différents, aucune intervention, même logicielle, n'est nécessaire sur les bornes. Dans le cas contraire, il suffit de reprogrammer les bornes pour qu'elles acceptent deux modes de fonctionnement différents fixés par le transpondeur qui se trouve dans le champ et qui, par exemple, émet une information en ce sens à la borne correspondante.

Pour désaccorder le circuit oscillant du transpondeur, une première solution consiste à connecter, en parallèle avec l'antenne du transpondeur, deux condensateurs dont l'un est associé en série avec un interrupteur de façon à le rendre commandable. Cette solution consiste à utiliser, à d'autres fins, un montage du type de celui décrit dans le document WO-A-98/29760 qui prévoit un désaccord en fréquence d'un transpondeur au moyen d'une capacité modifiable dans le circuit oscillant.

Selon l'invention, pour que le couplage optimal corresponde à une distance la plus faible possible entre la borne et le transpondeur, il faut diminuer la capacité C2 par rapport à sa valeur à l'accord. Cela revient à augmenter la fréquence de résonance du circuit oscillant du transpondeur.

La figure 5 représente un premier mode de réalisation d'un transpondeur 30 selon l'invention. Comme précédemment, ce transpondeur est constitué à partir d'un circuit oscillant parallèle comprenant une inductance ou antenne L2 et un condensateur C2' entre deux bornes 11', 12' du circuit.

Dans le mode de réalisation illustré par la figure 5, le redressement opéré pour extraire une tension Va d'alimentation continue, lissée par un condensateur Ca, est un redressement monoalternance au moyen d'une diode D dont l'anode est reliée à la borne 11' et dont la cathode est connectée à la borne positive 14 du condensateur Ca. La référence de tension 15 correspond à la borne négative du condensateur Ca reliée directement à la borne 12'. La tension Va est destinée à un bloc électronique 31 comprenant, par exemple, les circuits 16 à 20 de la figure 1. Un condensateur C3 est monté en série avec un interrupteur (par exemple, un transistor MOS) K1 entre les bornes 11' et 12'. L'interrupteur K1 est commandé par le circuit 31 en étant fermé pour un fonctionnement accordé.

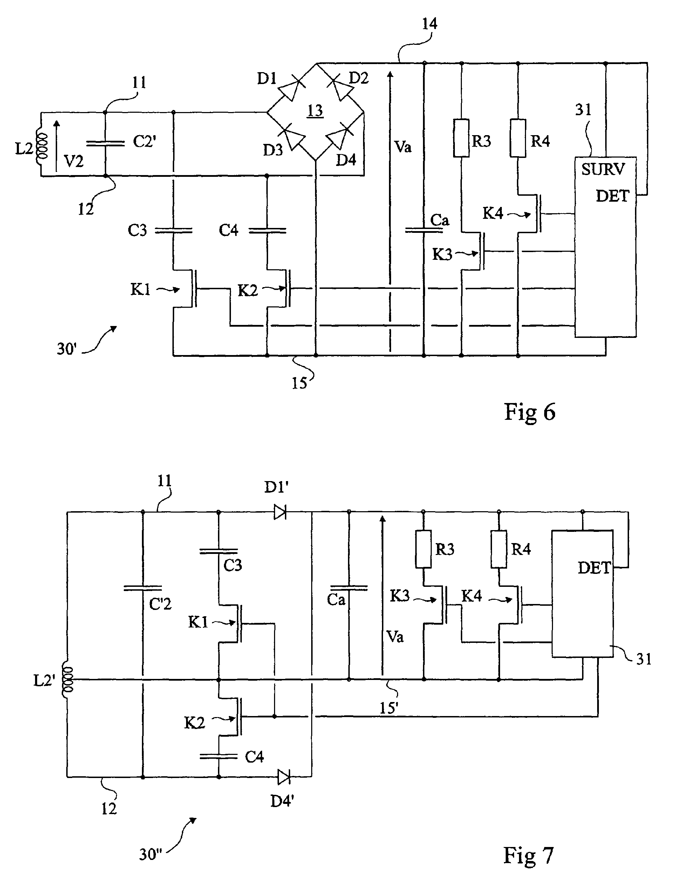

La figure 6 représente un deuxième mode de réalisation d'un transpondeur 30' selon l'invention. Selon ce mode de réalisation, les bornes 11, 12 du circuit oscillant sont reliées aux bornes d'entrée alternative d'un pont 13 constitué, par exemple, de diodes D1 à D4 comme en figure 1. Deux bornes de sortie redressée 14, 15 du pont 13 fournissent, par l'intermédiaire du condensateur de lissage Ca, la tension Va d'alimentation du bloc électronique 31.

selon ce mode de réalisation, deux condensateurs C3 et C4 sont associés chacun en série avec un interrupteur (par exemple, un transistor MOS) K1, K2, respectivement entre les bornes 11 et 12 et la borne 15. Ainsi, une première borne du condensateur C3 est connectée à la borne 11, sa deuxième borne étant reliée, par l'intermédiaire du transistor K1, à la borne 15. Une première borne du condensateur C4 est connectée à la borne 12 tandis que son autre borne est connectée, par l'intermédiaire d'un transistor K2, à la borne 15. Les condensateurs C3 et C4 sont respectivement associées à chaque signe de la tension alternative haute fréquence V2 aux bornes de l'antenne L2. Les deux condensateurs C3 et C4 sont donc de mêmes valeurs. Les deux transistors K1 et K2 sont commandés par le bloc 31, de préférence, à partir d'un même signal, pour être fermés quand le circuit doit être accordé sur la fréquence de la porteuse de téléalimentation.

On notera que, grâce au dédoublement des condensateurs, on peut disposer d'un point de référence (ligne 15) pour la commande des interrupteurs K1 et K2. Ainsi, si les interrupteurs K1 et K2 sont constitués de transistors MOS à canal N, il est désormais possible, par un signal logique issu du bloc 31, de commander ces interrupteurs en tout ou rien, ce que ne permet pas la solution préconisée par le document wO-A-98/29760.

Par exemple, les condensateurs C2', C3 et C4 ont, chacun, une capacité correspondante à la moitié de la capacité (C2, figure 1) nécessaire pour accorder le circuit oscillant sur la fréquence de la porteuse du lecteur.

La figure 7 représente un troisième mode de réalisation d'un transpondeur 30" selon la présente invention. Ce transpondeur 30" reprend sensiblement les mêmes éléments que celui de la figure 6.

Une caractéristique de ce troisième mode de réalisation est de prévoir une inductance L2' à point milieu. Ce point milieu sert alors de référence 15 pour l'alimentation continue des circuits électroniques 31 du transpondeur. Ainsi, une première borne 11 de l'enroulement L2' est connectée à l'anode d'une diode de redressement D1' dont la cathode constitue la borne 14 d'alimentation locale positive du transpondeur. Une deuxième borne 12 de l'enroulement L2' est connectée à l'anode d'une deuxième diode de redressement D4' dont la cathode est connectée à la borne 14. Comme précédemment, un condensateur Ca est connecté entre la borne 14 et la ligne de référence 15 pour lisser la tension d'alimentation des circuits électroniques 31. Entre chacune des bornes 11, 12 et la ligne de référence 15 est connecté une capacité commutée selon l'invention constituée, par exemple comme en figure 5, d'un condensateur C3, C4 en série avec un interrupteur K1, K2.

On notera que les commandes des interrupteurs K1, K2 peuvent être réalisées à partir d'une même commande fournie par le bloc 31, comme l'illustre la figure 7, ou par des commandes distinctes (figure 6).

Dans les modes de réalisation des figures 6 et 7, les deux transistors K1 et K2 sont, de préférence, fermés quand le circuit oscillant doit être accordé. Si, en particulier dans le circuit de la figure 7, les condensateurs C3 et C4 ont, chacun, une valeur double de la valeur du condensateur C2', la fréquence de résonance se trouve, quand les interrupteurs K1 et K2 sont ouverts, repoussée approximativement au double de la fréquence de la porteuse.

Un transpondeur 30 (figure 5), 30' (figure 6), ou 30" (figure 7) de l'invention comprend également un circuit de rétromodulation résistif constitué, de préférence, de deux résistances R3, R4, respectivement en série avec un interrupteur K3, K4 entre les bornes 14 et 15. Les résistances R3 et R4 ont des valeurs différentes, respectivement relativement forte et faible.

Si on est entre la position de couplage critique et la borne, on utilise la résistance R3 qui est de forte valeur pour effectuer la rétromodulation et on ouvre le transistor K1 (ou les transistors K1 et K2). On a alors un fonctionnement désaccordé du système qui sera proche d'un fonctionnement en transformateur.

Si on est loin de la position de couplage critique en étant plus loin de la borne que cette position, cela revient à dire que le couplage est lâche. On ferme alors le transistor K1 (ou les transistors K1 et K2), et on effectue la rétromodulation résistive au moyen de la résistance R4 qui est de plus faible valeur. On est alors dans un mode de fonctionnement classique.

On notera que l'invention, en utilisant une résistance de faible valeur quand on est loin de la borne, optimise la portée du système. Le rapport entre les valeurs respectives des résistances R3 et R4 est, par exemple, compris entre 4 et 10 (R3 comprise entre 0,4 et 5 kiloohms et R4 comprise entre 100 et 500 ohms) et, de préférence, de l'ordre de 6 (par exemple, environ 1500 et 250 ohms).

Dans le dimensionnement des condensateurs du circuit oscillant, on tiendra compte du moyen de redressement utilisé et de la valeur du condensateur de lissage Ca. En effet, les périodes de conductions des diodes d'un pont (figure 7) sont généralement plus faibles devant la période de la porteuse de téléalimentation que les périodes de conduction d'une diode de redressement monoalternance (figure 6). Par conséquent, le rapport cyclique d'action des moyens de rétromodulation est différent selon le type de redressement effectué. Or, ce rapport cyclique influe, notamment, sur la valeur de la résistance équivalente R2, donc sur le coefficient de couplage.

Pour mettre en oeuvre un désaccord du circuit oscillant du transpondeur lorsqu'il se trouve en couplage très proche, on utilise une information relative à la distance qui sépare la borne du transpondeur. Cette distance peut être déterminée par le transpondeur ou par la borne.

Côté transpondeur, on pourra utiliser un des modes de réalisation des figures 5 à 7. Selon l'invention, leur circuit électronique respectif est pourvu d'une entrée DET recevant la tension locale d'alimentation Va. Cette entrée DET est associée à un circuit (non représenté) de mesure de la tension Va et à au moins un élément de mémorisation de cette mesure. Dans un exemple de réalisation particulier, il pourra s'agir du microprocesseur (6, figure 1). La mémorisation des valeurs des tensions mesurées s'effectue, soit de façon analogique, mais préférentiellement de façon numérique sur plusieurs bits dont le nombre dépend de la précision d'analyse souhaitée.

Selon un mode de mise en oeuvre préféré de la présente invention, on effectue périodiquement, quand le transpondeur se trouve à portée d'une borne et, de préférence, dès que le transpondeur est activé (alimenté) par son entrée dans le champ d'un lecteur, le cycle de mesures suivant. Le transistor K1 (figure 5) ou les transistors K1 et K2 (figure 6) sont initialement fermés, le circuit oscillant étant accordé. On mémorise la tension présente sur la borne DET. Puis, on ouvre le ou les transistors K1, K2. Le circuit se trouve alors désaccordé, sa fréquence de résonance étant, dans le cas de la figure 5, repoussée à plus du double de la fréquence d'accord si les condensateurs C2' et C3 ont la même valeur. On mémorise de nouveau la tension sur la borne DET. A titre de variante, la première mesure s'effectue circuit désaccordé. On compare entre elles les deux valeurs obtenues et on mémorise, par exemple sur un seul bit, le résultat de cette comparaison.

On notera que le temps nécessaire (par exemple, de l'ordre de quelques centaines de microsecondes) à l'exécution des deux mesures "accordé" et "désaccordé" est faible par rapport à la vitesse de déplacement du transpondeur qui correspond, dans la plupart des applications, à la vitesse de déplacement d'une main.

On notera également que la durée pendant laquelle on désaccorde le circuit oscillant pour effectuer une mesure est, de préférence, choisie pour être sensiblement différente de la demi-période de la sous-porteuse, afin que cette mesure ne soit pas interprétée par la borne comme une rétromodulation. En effet, le désaccord du circuit oscillant du transpondeur se traduit par un déphasage du signal dans le circuit oscillant L1C1 (figure 1) de la borne qui, lors de la détermination de distance, ne doit pas être pris pour une transmission de données.

Le cycle de mesures ci-dessus est répété après un bref intervalle de temps (par exemple, de l'ordre d'une milliseconde) qui reste rapide par rapport au temps de passage d'un transpondeur devant une borne (plusieurs centaines de millisecondes).

On notera que, dans un mode de mise en oeuvre simplifié, on peut se contenter de déterminer, avant chaque début de transmission de données du transpondeur vers la borne, la position du transpondeur par rapport au couplage critique.

L'évolution de la valeur du bit de comparaison permet de savoir si le transpondeur se trouve plus près ou plus loin de la borne par rapport à la position de couplage critique. Si le bit indique un niveau plus élevé en position désaccordée qu'en position accordée, cela signifie que le transpondeur est très près de la borne (en couplage serré). Dans le cas contraire, le transpondeur est soit près du couplage critique, soit entre la position de couplage critique et la limite de portée du système.

A titre de mode simplifié de réalisation, on pourra ne pas utiliser une entrée (DET) dédiée pour la détermination de distance, mais utiliser une entrée existante du microprocesseur (contenu dans le bloc 31) du transpondeur. Cette entrée classique surveille la tension locale d'alimentation disponible aux bornes du condensateur Ca par rapport à un seuil prédéterminé. Le microprocesseur mémorise (sous la forme d'un bit) l'état de cette tension par rapport à ce seuil. Ce bit sert classiquement, par exemple, à détecter si la tension récupérée par le circuit oscillant est suffisante pour l'alimentation du transpondeur, donc à activer ce dernier quand il entre dans le champ d'un lecteur. Cette fonction existe, par exemple, dans des microprocesseurs de transpondeur, par exemple, les circuits ST16 et ST19 de la société STMicroelectronics, et peut donc être utilisée sans modification importante du transpondeur.

La détermination de distance par rapport au couplage critique présente l'avantage que la détection de zone (couplage serré ou couplage lâche) effectuée s'apparente à une mesure différentielle. En effet, la détection s'effectue par rapport au couplage critique qui dépend du système et de son environnement. Ce n'est qu'au couplage critique que le niveau de tension récupéré est maximal quand les circuits sont accordés. Il n'est donc pas nécessaire de prévoir une référence ou un seuil de distance particulier. En d'autres termes, ce seuil de distance entre les deux modes de fonctionnement accordé et désaccordé est alors auto-adaptatif.

On notera que l'invention ne nécessite pas de transmission d'information (de modulation) du lecteur vers le transpondeur ou du transpondeur vers le lecteur pour la détermination de distance. Le transpondeur de l'invention détecte donc sa position sans aucune intervention du lecteur. Le transpondeur peut alors, par exemple, émettre en rétromodulation un message différent selon sa position, la nature de ce message plaçant le système dans un mode de fonctionnement ou un autre.

On notera également que la transmission de données du transpondeur vers la borne peut toujours être basée sur un codage par saut de phase, que ce soit en fonctionnement accordé ou désaccordé du transpondeur. En effet, le désaccord ne change pas la fréquence de la porteuse haute fréquence (par exemple, 13,56 MHz) sur laquelle sont détectés les sauts de phase au rythme de la sous-porteuse (par exemple, 847,5 kHz).

Bien entendu, la présente invention est susceptible de diverses variantes et modifications qui apparaîtront à l'homme de l'art. En particulier, les dimensionnements des différents éléments résistifs et capacitifs dépendent de l'application et, notamment, de la fréquence des différentes porteuses et de la portée du système. De plus, la réalisation pratique des différents circuits dépend de l'application et est à la portée de l'homme du métier à partir des indications fonctionnelles données ci-dessus. En outre, la détection de distance entre le transpondeur et la borne pourra être effectuée par d'autres moyens, par exemple, en ayant recours à la borne comme cela est décrit, par exemple, dans le document WO-A-97/34250. Toutefois, le mode de réalisation préféré de la présente invention présente l'avantage de ne pas solliciter la borne, que ce soit pour la détection de distance ou pour le désaccord.

Parmi les applications de la présente invention, on signalera plus particulièrement les cartes à puces sans contact (par exemple, les cartes d'identification pour contrôle d'accès, les cartes porte-monnaie électronique, les cartes de stockage d'information sur le possesseur de la carte, les cartes de fidélité de consommateurs, les cartes de télévisions à péage, etc.), et les systèmes de lecture ou de lecture/écriture de ces cartes (par exemple, les bornes ou portiques de contrôle d'accès, les distributeurs automatiques de produits, les terminaux d'ordinateurs, les terminaux téléphoniques, les téléviseurs ou décodeurs satellite, etc.).

## Revendications

1. Transpondeur électromagnétique (30 ; 30' ; 30") du type comprenant un circuit oscillant en amont d'un moyen de redressement (D ; 13 ; D1', D4') propre à fournir une tension continue d'alimentation d'un circuit électronique (31), ledit circuit électronique comprenant des moyens pour émettre des informations codées numériquement, **caractérisé en ce qu'**il comporte des moyens (C3, K1, C4, K2) pour, lorsque le transpondeur doit émettre, à l'aide de moyens de modulation résistifs (R3, K3), des informations alors qu'il est très proche d'une borne (1) de lecture-écriture, désaccorder le circuit oscillant du transpondeur par rapport à une fréquence déterminée, le débit de transmission des informations étant, dans cette position de désaccord, plus élevé que dans une position accordée du circuit oscillant.

2. Transpondeur selon la revendication 1, **caractérisé en ce que** ladite fréquence déterminée correspond à la fréquence d'une porteuse de téléalimentation du transpondeur (30), provenant de ladite borne (1).

3. Transpondeur selon la revendication 1 ou 2, **caractérisé en ce que** les moyens de désaccord du circuit oscillant sont constitués d'une capacité commutée (C3, K1), en parallèle avec un élément inductif (L2) du circuit, ledit moyen de redressement étant constitué d'un élément à conduction unidirectionnelle (D).

4. Transpondeur selon la revendication 1 ou 2, **caractérisé en ce que** les moyens de désaccord du circuit oscillant sont constitués de deux condensateurs (C3, C4), respectivement associés à chaque borne (11, 12) d'extrémité d'un élément inductif (L2 ; L2') du circuit oscillant, chaque condensateur étant associé en série à un moyen de commutation (K1, K2) dont une borne de référence est connectée à un potentiel de référence (15) d'alimentation du circuit électronique, en aval du moyen de redressement (13 ; D1', D4').

5. Transpondeur selon l'une quelconque des revendications 1 à 4, **caractérisé en ce que** lesdits moyens (C3, C4) pour désaccorder le circuit oscillant (L2, C2) sont commandables entre deux positions de façon à permettre une sélection entre un fonctionnement du transpondeur (30, 30', 30") accordé sur ladite fréquence déterminée, ou désaccordé de cette fréquence déterminée.

6. Transpondeur selon l'une quelconque des revendications 1 à 5, **caractérisé en ce que** lesdits moyens (C3, C4) pour désaccorder le transpondeur (30, 30', 30") servent également à détecter la distance qui le sépare d'une borne de lecture-écriture.

7. Transpondeur selon l'une quelconque des revendications 1 à 6, **caractérisé en ce qu'**il comporte en outre deux moyens de modulation résistive (R3, K3 ; R4, K4), en parallèle sur un condensateur (Ca) de lissage de la tension redressée délivrée par ledit moyen de redressement (D ; 13 ; D1', D2'), chaque moyen de modulation étant dédié à un de mode de fonctionnement accordé ou désaccordé du transpondeur.

8. Système de transmission de données sans fil et sans contact entre une borne (1) de génération d'un champ électromagnétique et au moins un transpondeur (30, 30', 30") dépourvu de moyens d'alimentation autonome, **caractérisé en ce que** le transpondeur est conforme à l'une quelconque des revendications 1 à 7.

9. Système selon la revendication 8, **caractérisé en ce que** le débit de transmission des données du transpondeur (30, 30', 30") vers la borne (1) est différent selon que le circuit oscillant (L2, C2) du transpondeur est ou non accordé sur la fréquence déterminée.

10. Système selon la revendication 8, **caractérisé en ce que** le débit de transmission des données de la borne (1) vers le transpondeur (30, 30', 30") est différent selon que le circuit oscillant (L2, C2) du transpondeur est ou non accordé sur la fréquence déterminée.

## Claims

1. An electromagnetic transponder (30; 30'; 30") including an oscillating circuit upstream of a rectifying means (D; 13; D1', D4') adapted to provide a D.C. supply voltage to an electronic circuit (31), said electronic circuit including means for transmitting digitally-coded information, **characterized in that** it comprises means (C3, K1, C4, K2) for detuning said oscillating circuit with respect to a determined frequency, by means of resistive modulation means (R3, K3), when the transponder has to transmit information while it is very close to a read/write terminal (1), the rate of transmission of said information in the detuned configuration being higher than the data transmission rate in a tuned configuration of the oscillating circuit.

2. The transponder of claim 1, **characterized in that** said determined frequency corresponds to the frequency of a carrier for remotely supplying the transponder (30), coming from said terminal (1).

3. The transponder of claim 1 or 2, **characterized in that** said means for detuning the oscillating circuit include a switched capacitor (C3, K1), in parallel with an inductive element (L2) of the circuit, the rectifying means being formed of a one-way conduction element (D).

4. The transponder of claim 1 or 2, **characterized in that** said means for detuning the oscillating circuit include two capacitors (C3, C4), respectively associated with each end terminal (11, 12) of an inductive element (L2; L2') of the oscillating circuit, each capacitor being associated in series with a switching means (K1, K2), a reference terminal of which is connected to a reference supply potential (15) of the electronic circuit, downstream the rectifying means (13; D1', D4').

5. The transponder of any of claims 1 to 4, **characterized in that** said means (C3, C4) for detuning the oscillating circuit (L2, C2) are controllable between two positions to enable a selection between an operation of the transponder (30, 30', 30") tuned on the determined frequency, or detuned from this frequency.

6. The transponder of any of claims 1 to 5, **characterized in that** said means (C3, C4) for detuning the transponder (30, 30', 30") are also used to detect the distance separating it from a read/write terminal.

7. The transponder of any of claims 1 to 6, **characterized in that** it further includes two resistive modulation means (R3, K3; R4, K4), in parallel with a capacitor (Ca) for smoothing the rectified voltage provided by the rectifying means (D; 13; D1', D2'), each modulation means being dedicated to one of the tuned or detuned operating modes of the transponder.

8. A system of wireless and contactless data transmission between a terminal (1) of generation of an electromagnetic field and at least one transponder (30, 30', 30") having no independent supply means, **characterized in that** the transponder is that of any of claims 1 to 7.

9. The system of claim 8, **characterized in that** the data transmission rate from the transponder (30, 30', 30") to the terminal (1) is different according to whether the oscillating circuit (L2, C2) of the transponder is or is not tuned to the determined frequency.

10. The system of claim 8, **characterized in that** the data transmission rate from the terminal (1) to the transponder (30, 30', 30") is different according to whether the oscillating circuit (L2, C2) of the transponder is or is not tuned to the determined frequency.

## Patentansprüche

1. Elektromagnetischer Transponder (30; 30'; 30"), der eine oszillierende Schaltung stromaufwärts von Gleichrichtermitteln (D; 13; D1', D4') aufweist, die geeignet sind, um eine Gleichstromversorgungsspannung zu einer elektronischen Schaltung (31) zu liefern, wobei die elektronische Schaltung Mittel zur Übertragung von digital kodierten Informationen aufweist, **dadurch gekennzeichnet, dass** sie Mittel (C3, K1, C4, K2) aufweist, um die oszillierende Schaltung bezüglich einer bestimmten Frequenz durch resistive Modulationsmittel (R3, K3) zu verstimmen, wenn der Transponder Informationen zu übertragen hat, während er sehr nahe an einem Lese/Schreib-Terminal (1) ist, wobei die Übertragungsrate der Informationen in der verstimmten Konfiguration höher ist als die Datenübertragungsrate in einer gestimmten Konfiguration der Oszillationsschaltung.

2. Transponder nach Anspruch 1, **dadurch gekennzeichnet, dass** die bestimmte Frequenz der Frequenz eines Trägers zur Versorgung des Transponders (30) aus der Ferne entspricht, die von dem Terminal (1) kommt.

3. Transponder nach Anspruch 1 oder 2, **dadurch gekennzeichnet, dass** die Mittel zum Verstimmen der Oszillationsschaltung einen geschalteten Kondensator (C3, K1) parallel zu einem induktiven Element (L2) der Schaltung aufweist, wobei die Gleichrichtermittel aus einem Ein-Weg-Leitungselement (D) gebildet sind.

4. Transponder nach Anspruch 1 oder 2, **dadurch gekennzeichnet, dass** die Mittel zum Verstimmen der oszillierenden Schaltung zwei Kondensatoren (C3, C4) aufweisen, die jeweils mit jedem Endanschluss (11, 12) eines induktiven Elementes (L2; L2') der oszillierenden Schaltung assoziiert sind, wobei jeder Kondensator in Reihe mit Schaltmitteln (K1, K2) assoziiert ist, wobei ein Referenzanschluss davon mit einem Referenzversorgungspotential (15) der elektronischen Schaltung verbunden ist, und zwar stromabwärts der Gleichrichtermittel (13; D1', D4').

5. Transponder nach einem der Ansprüche 1 bis 4, **dadurch gekennzeichnet, dass** die Mittel (C3, C4) zum Entstimmen der oszillierenden Schaltung (L2, C2) zwischen zwei Positionen steuerbar sind, um eine Auswahl zwischen einem Betrieb des Transponders (30, 30', 30"), während er auf die bestimmte Frequenz eingestimmt ist, oder während er von dieser Frequenz verstimmt ist, zu ermöglichen.

6. Transponder nach einem der Ansprüche 1 bis 5, **dadurch gekennzeichnet, dass** die Mittel (C3, C4) zum Verstimmen des Transponders (30, 30', 30") auch verwendet werden, um die Distanz zu detektieren, die ihn von einem Lese/Schreib-Terminal trennt.

7. Transponder nach einem der Ansprüche 1 bis 6, **dadurch gekennzeichnet, dass** er weiter zwei resistive Modulationsmittel (R3, K3; R4, K4) parallel zu einem Kondensator (Ca) aufweist, um die gleichgerichtete Spannung zu glätten, die von den Gleichrichtermitteln (D; 13; D1', D2') geliefert werden, wobei jedes Modulationsmittel für einen Betriebszustand, d.h. den gestimmten oder verstimmten Betriebszustand des Transponders vorgesehen ist.

8. System zur drahtlosen und kontaktlosen Datenübertragung zwischen einem Terminal (1) zur Erzeugung eines elektromagnetischen Feldes und mindestens einem Transponder (30, 30', 30") ohne unabhängige Versorgungsmittel, **dadurch gekennzeichnet, dass** der Transponder jener nach einem der Ansprüche 1 bis 7 ist.

9. System nach Anspruch 8, **dadurch gekennzeichnet, dass** die Datenübertragungsrate vom Transponder (30, 30', 30") zum Terminal (1) unterschiedlich ist, und zwar entsprechend dem, ob die oszillierende Schaltung (L2, C2) des Transponders auf die bestimmte Frequenz eingestimmt ist, oder nicht.

10. System nach Anspruch 8, **dadurch gekennzeichnet, dass** die Datenübertragungsrate vom Terminal (1) zum Transponder (30, 30', 30") unterschiedlich ist, und zwar entsprechend dem, ob die oszillierende Schaltung (L2, C2) des Transponders auf die bestimmte Frequenz eingestimmt ist, oder nicht.
